Europäisches Patentamt

**European Patent Office**

**Office européen des brevets**

(19)

(11) Veröffentlichungsnummer: **0 069 990**

**A1**

(12) # EUROPÄISCHE PATENTANMELDUNG

(21) Anmeldenummer: **82106094.4**

(22) Anmeldetag: **08.07.82**

(51) Int. Cl.³: **B 62 J 1/02**

(30) Priorität: **10.07.81 DE 3127396**

(43) Veröffentlichungstag der Anmeldung:
**19.01.83 Patentblatt 83/3**

(84) Benannte Vertragsstaaten:
**BE FR GB IT NL**

(71) Anmelder: **PURAC Kunststoffprodukte GmbH**
**Im Dümpel 14 b**
**D-5870 Hemer(DE)**

(72) Erfinder: **Kaalverink, Gerry H.**
**Im Dümpel 14 b**
**D-5870 Hemer(DE)**

(74) Vertreter: **Zmyj, Erwin, Dipl.-Ing.**
**Postfach 95 04 28**
**D-8000 München 95(DE)**

(54) **Sattel für Zweiräder.**

(57) Auf einem Untergestell (1) eines Zweirad-Sattels sind Schraubenfedern (2) an ihren unteren Enden, an denen sie angedrehte Augen (4) aufweisen, durch Nieten befestigt. Die oberen Enden der Schraubenfedern sind als freie Federenden (5) ausgebildet, die als Tangente zur Federwindung parallel zur Sattellängsachse ausgerichtet sind. Diese freien Federenden (5) sind in Öffnungen (10) am Tragkörper (6) des Satteloberteils einführbar, wobei diese Öffnungen 10 in Ansätzen oder Zapfen (8), die mit dem Tragteil (6) verbunden sind, vorgesehen sind. Am vorderen Ende des Untergestells ist ein Teil (3) einer Druckknopfverbindung vorgesehen, dessen Gegenstück sich am Tragkörper (6) befindet, so daß nach dem Einstecken der Federenden (5) in die Öffnungen (10) das Oberteil des Sattels mit dem Untergestell durch die Druckknopfverbindung verbindbar ist.

Fig. 1

Sattel für Zweiräder

Die Erfindung bezieht sich auf einen Sattel für Zweiräder, bestehend aus einem Untergestell und einem Oberteil, das einen mit
einer Polsterung versehenen Tragkörper aufweist, der mit dem
Untergestell an seinem vorderen Ende ungefedert und an seinem
hinteren Ende über Schraubenfedern abgefedert verbunden ist.

Bei den üblichen Fahrradsätteln sind an den Schraubenfedern, die
zwischen dem Untergestell und dem gepolsterten Oberteil vorgesehen
sind, meistens angewinkelte Augen vorhanden, welche in einem
Arbeitsgang automatisch gewickelt werden oder nach dem Wickeln
quer zur Federachse gebogen werden, wie dies in Fig. 2 der beiliegenden Zeichnung erläutert ist. Dies wirkt kostenerhöhend, da
ein zusätzlicher Arbeitsvorgang für das Abbiegen notwendig ist.
Bei den automatisch angedrehten Augen besteht ein Problem darin,
die Verbindungselemente, entweder Nieten oder Schrauben, durch
die Augen zu stecken, wobei bei diesem Arbeitsvorgang der Vorteil
der billigen Fertigung verloren geht. Zwar könnten die Verbindungselemente beim Wickelvorgang mit eingewickelt werden, doch bleibt
bei Nieten immer noch ein Nachteil, der darin besteht, daß bei der
Vernietung ein Gegenhalter wegen der angedrehten Augen nur seitlich zwischen den Windungen hindurchgesteckt werden kann, wodurch
seine Stärke auf den Abstand der Windungen beschränkt ist. Dies
bedeutet, daß die anzuwendende Kraft ebenfalls beschränkt bleibt.

Es gibt auch Konstruktionen, bei denen die letzten Windungen der
Federn entweder in oder auf Zapfen geschraubt werden. Nachteilig
bei allen diesen Konstruktionen ist jedoch, daß die Schraubbewegung von Hand ausgeführt werden muß, was den Herstellungsvorgang wesentlich verteuert.

Aufgabe der Erfindung ist es, einen Sattel der eingangs erläuterten Art so auszugestalten, daß das vormontierte und fertig bearbeitete Untergestell in einfacher Weise mit dem bereits fertigen Oberteil verbunden werden kann.

Diese Aufgabe wird erfindungsgemäß ausgehend von einem Sattel der oben angegebenen Art dadurch gelöst, daß die Verbindung der Schraubenfedern mit dem Tragkörper als Steckverbindung ausgebildet ist, bei der die im wesentlichen in einer parallel zur Satteloberfläche frei auslaufenden Federenden in Öffnungen am Tragkörper einsteckbar sind und die vordere Verbindung zwischen dem Tragkörper und dem Untergestell als eine auch noch nach dem Herstellen der hinteren Steckverbindung herstellbare Verbindung ausgebildet ist.

Durch die Erfindung kann das gesamte Untergestell einschließlich Federn vormontiert und beschichtet bzw. lackiert oder galvanisch beschichtet werden und dann mit wenigen Handgriffen mit dem Oberteil verbunden werden, indem die freien Federenden der Schraubenfedern in die Öffnungen am Tragkörper eingesteckt und dann das Untergestell mit dem Oberteil am vorderen Ende verbunden wird.

Die Verbindung zwischen dem Untergestell und dem Oberteil am vorderen Ende kann entweder durch eine starre Nietverbindung erfolgen, wobei für den Fall, daß eine empfindliche Polsterung vorgesehen ist, auch solche Nieten verwendet werden können, die eine Bearbeitung nur von einer Seite aus erfordern, wie dies bei Nieten möglich ist, die zur Vernietung von Blechen zur Anwendung kommen, welche einen geschlossenen Hohlraum bilden, wie dies beispielsweise in der Flugzeugindustrie der Fall ist.

Eine wesentlich vorteilhaftere Verbindungsmöglichkeit zwischen
Untergestell und Oberteil am vorderen Ende besteht jedoch in weiterer Ausgestaltung der Erfindung darin, daß diese vordere Verbindung zwischen dem Untergestell und dem Tragkörper nach Art eines
Druckknopfes lösbar ausgebildet ist. Bei dieser Druckknopfverbindung ist an einem der beiden Teile ein verdickter Kopf vorgesehen,
während der gegenüber liegende Teil eine Öffnung mit dahinter liegenden auseinanderdrückbaren federnd gestalteten Schenkeln aufweist,
die nach dem Durchstecken des Kopfes hinter diesen schnappen.
Mit einer solchen Schnappverbindung ist die Vereinigung von vormontiertem Untergestell und Oberteil besonders einfach, da nur die
oberen freien Federenden in die Öffnungen des Untergestells eingeführt und dann die Schnappverbindung zusammengedrückt werden
muß.

Eine vorteilhafte Ausgestaltung besteht darin, daß die freien Enden
der Schraubenfedern als Tangente zum Federumfang parallel zur
Sattellängsachse nach hinten ragend ausgebildet sind. Hierdurch ist
der Einführvorgang der freien Federenden in die Öffnungen am
Tragteil besonders einfach.

Aber selbst wenn gemäß einer anderen Ausgestaltung der Erfindung
die für die Steckverbindung vorgesehenen Enden der Schraubenfedern entsprechend dem Biegeradius der Federwindungen gekrümmt sind, läßt sich die Steckverbindung immer noch verhältnismäßig einfach durchführen.

Die Öffnungen für die Aufnahme der freien Federenden können in
vorteilhafter Ausgestaltung in Ansätzen oder Zapfen vorgesehen
sein, die mit dem Tragkörper verbunden sind. Dabei können die Ansätze oder Zapfen mittels einer Schnappverbindung lösbar am Tragkörper befestigt sein. Es ist aber auch möglich, daß die Ansätze oder Zapfen an dem Tragkörper angeformt sind.

Damit die freien Enden der Schraubenfedern nicht wieder aus den Öffnungen während des Gebrauchs des Sattels herausrutschen können, empfiehlt es sich, entsprechend einer weiteren Ausgestaltung der Erfindung, daß die Schraubenfederachsen in die Richtung, vorzugsweise um 15° gegenüber der Vertikalen, geneigt sind, in die die freien Schraubenfederenden zeigen. Hierdurch ist es erforderlich, daß die Schraubenfedern, die auf dem Untergestell unter einem Neigungswinkel befestigt sind, bei der Vereinigung des Untergestells mit dem Oberteil elastisch verformt werden müssen, um die Enden in die Öffnungen hineinzubekommen. Im montierten Zustand weisen die Schraubenfedern eine Vorspannung auf, d.h. sie sind quer zu ihrer Längsachse ausgelenkt, wodurch sie fest mit ihren Enden in den Öffnungen der Ansätze oder Zapfen am Tragteil des Oberteils sitzen.

Die Erfindung ist in der Zeichnung beispielsweise dargestellt. In dieser Zeigen:

Fig. 1    ein Untergestell eines Fahrradsattels mit vormontierten Schraubenfedern;

Fig. 2    eine Schraubenfeder bekannter Art;

Fig. 3    eine Schraubenfeder entsprechend Fig. 1 in vergrößertem Maßstab;

Fig. 4    einen Längsschnitt durch ein Oberteil eines Sattels;

Fig. 5    eine Einzelheit des Oberteils in vergrößertem Maßstab; und

Fig. 6    eine Druckknopfverbindung zwischen Untergestell und Oberteil in Einzeldarstellung.

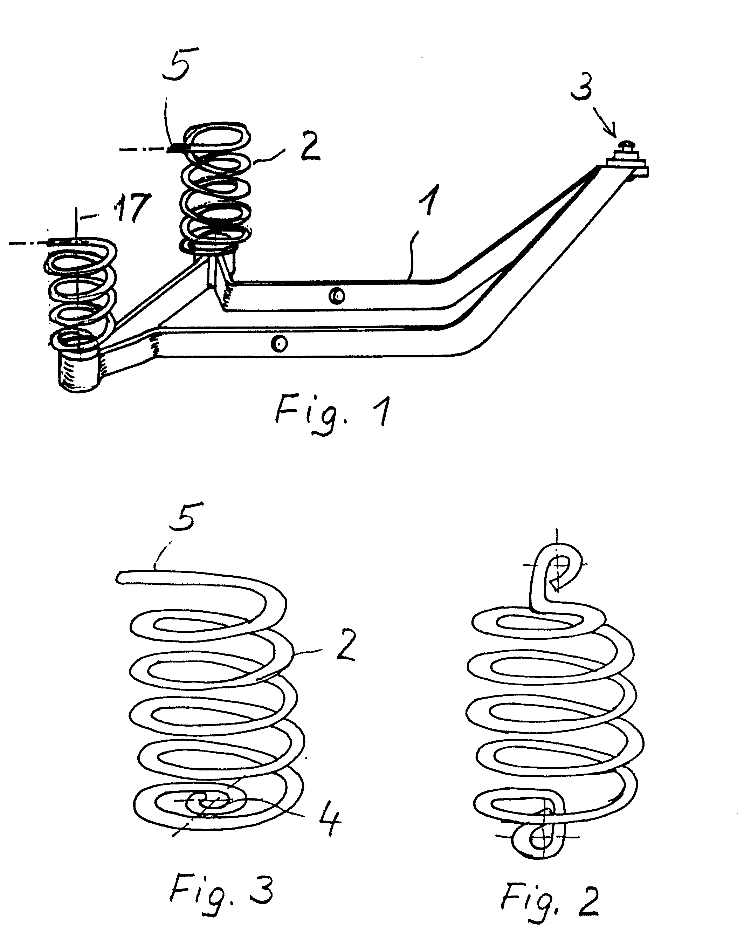

In Fig. 1 ist ein Untergestell 1 dargestellt, an dessen hinterem Ende zwei Schraubenfedern 2 befestigt sind, während das vordere nach oben hochgezogene Ende einen Teil 3 einer noch näher zu beschreibenden Druckknopfverbindung trägt. Die Federn 2, von denen eine in Fig. 3 in größerem Maßstab dargestellt ist, sind als Schraubenfedern ausgebildet, bei denen das untere Ende des Federdrahtes nach innen zu einem Auge 4 gerollt ist, durch welches ein in der Zeichnung nicht erkennbarer Niet gesteckt wird, um die Feder 2 mit dem Untergestell 1 zu verbinden. Das obere Ende der Schraubenfeder ist als freies Federende ausgebildet, wobei dieses Federende 5 als Tangente zur Federwindung ausgebildet ist, etwas über den Schrauberfederumfang hervorsteht und im montierten Zustand parallel zur Längsachse des Sattels ausgerichtet ist. Da das obere Federende offen ist, kann zur Vernietung des unteren Federendes ein Halter in einfacher Weise eingeführt werden. Bei Schraubenfedern, bei denen das obere Federende entsprechend dem unteren Federende gemäß Fig. 3 ausgebildet ist, ist eine solche einfache Vernietung nicht möglich, weil der Gegenhalter durch die Windungen hindurchgesteckt werden muß. Dies ist zwar bei der in Fig. 2 dargestellten bekannten Feder nicht erforderlich, bei der die Federaugen abgebogen sind, doch ist für dieses Abbiegen, wie bereits eingangs erläutert, ein zusätzlicher Arbeitsaufwand erforderlich.

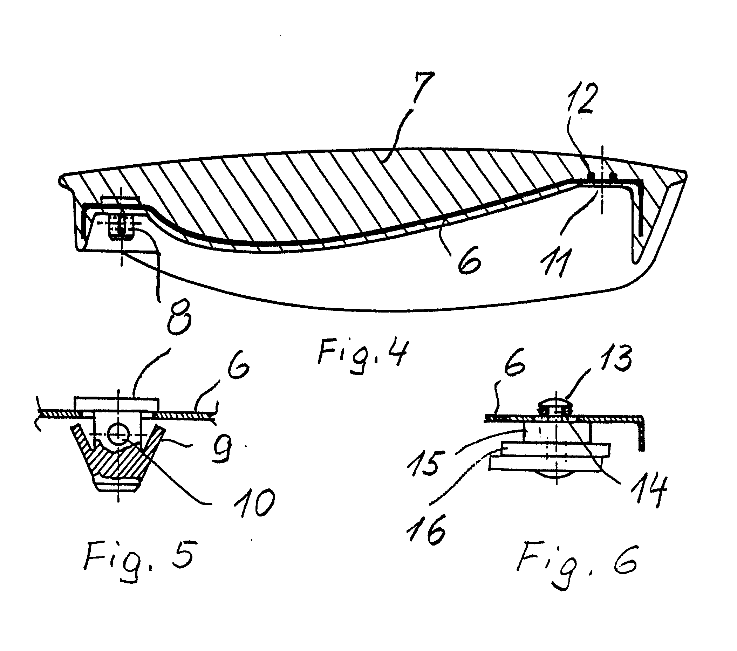

In Fig. 4 ist das Oberteil eines Sattels dargestellt, das aus einem Tragkörper 6 und einer Polsterung 7 besteht. Am hinteren Ende des Tragkörpers 6 sind Zapfen 8 vorgesehen, die entsprechend der Darstellung in Fig. 5 als Einsteckzapfen ausgebildet sein können, welche mit Widerhaken 9 versehen sind, um ein Zurückziehen des Zapfens zu verhindern. Diese Zapfen 8, von denen zwei Stück vorgesehen sind, weisen Öffnungen 10 auf, in die die Enden 5 der Schraubenfedern 2 einführbar sind.

Am vorderen Ende des Tragkörpers 6 ist eine Öffnung 11 vorgesehen, und auf der Oberseite des Tragkörpers 6 ist im Bereich der Öffnung 11 innerhalb der Polsterung 7 eine Feder 12 vorgesehen, die nach Art einer Haarnadel ausgebildet ist. Die beiden Schenkel dieser Feder schnappen hinter einen Kopf 13 des am Untergestell 1 angeordneten Teiles 3, wenn dieser Kopf durch die Öffnung 11 hindurchgedrückt wird. Der Kopf 13 sitzt am Ende eines Niets 14, der am vorderen Ende des Untergestells 1 befestigt ist und zusammen mit Abstandshaltern 15 und 16 den Teil 3 der Druckknopfverbindung bildet.

Damit die Federenden 5 nicht mehr aus den Öffnungen 10 der Zapfen 8 während des Gebrauchs herausrutschen können, sind die Schraubenfedern 12 so auf dem Untergestell 1 montiert, daß ihre Längsachsen 17 nach hinten geneigt sind, wodurch es erforderlich ist, bei der Verbindung des Oberteils 6, 7 mit dem Untergestell die Schraubenfedern nach dem Einführen der Federenden 5 in die Öffnungen 10 nach vorne zu drücken, um die Druckknopfverbindung am vorderen Ende zu schließen. Hierdurch stehen die Schraubenfedern, da sie während dieses Montagevorganges um ihre Längsachse gebogen werden, unter Vorspannung, so daß die Federenden 5 aus den Öffnungen 10 nicht mehr herausrutschen können.

— 7 —

## Patentansprüche

1. Sattel für Zweiräder, bestehend aus einem Untergestell und einem Oberteil, das einen mit einer Polsterung versehenen Tragkörper aufweist, der mit dem Untergestell an seinem vorderen Ende ungefedert und an seinem hinteren Ende über Schraubenfedern abgefedert verbunden ist, dadurch gekennzeichnet, daß die Verbindung der Schraubenfedern (2) mit dem Tragkörper (6) als Steckverbindung (5, 10) ausgebildet ist, bei der die im wesentlichen in einer parallel zur Satteloberfläche frei auslaufenden Federenden (5) in Öffnungen (10) am Tragkörper (6) einsteckbar sind und die vordere Verbindung zwischen dem Tragkörper (6) und dem Untergestell (1) als eine noch nach dem Herstellen der hinteren Steckverbindung herstellbare Verbindung ausgebildet ist.

2. Sattel nach Anspruch 1, dadurch gekennzeichnet, daß die vordere Verbindung als unlösbare Nietverbindung ausgebildet ist.

3. Sattel nach Anspruch 1, dadurch gekennzeichnet, daß die vordere Verbindung zwischen dem Untergestell (1) und dem Tragkörper (6) nach Art eines Druckknopfes (11, 12, 13) lösbar ausgebildet ist.

4. Sattel nach einem der Ansprüche 1 bis 3, dadurch gekennzeichnet, daß die freien Enden (5) der Schraubenfedern (2) als Tangente zum Federumfang parallel zur Sattellängsachse nach hinten ragend ausgebildet sind.

5. Sattel nach einem der Ansprüche 1 bis 3, dadurch gekennzeichnet, daß die für die Steckverbindung vorgesehenen Enden der Schraubenfedern entsprechend dem Biegeradius der Federwindungen gekrümmt sind.

6. Sattel nach einem der Ansprüche 1 bis 5, dadurch gekennzeichnet, daß die Öffnungen (10) für die Aufnahme der freien Federenden (5) in Ansätzen oder Zapfen (8) vorgesehen sind, die mit dem Tragkörper (6) verbunden sind.

7. Sattel nach Anspruch 6, dadurch gekennzeichnet, daß die Ansätze oder Zapfen (8) mittels einer Schnappverbindung (9) lösbar am Tragkörper (6) befestigt sind.

8. Sattel nach Anspruch 6, dadurch gekennzeichnet, daß die Ansätze oder Zapfen (8) an dem Tragkörper angeformt sind.

9. Sattel nach einem der Ansprüche 1 bis 8, dadurch gekennzeichnet, daß die Schraubenfederachsen (17) in die Richtung, vorzugsweise um $15^{o}$ gegenüber der Vertikalen, geneigt sind, in die die freien Schraubenfederenden (5) zeigen.

Fig. 1

Fig. 3

Fig. 2

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 291 899 (CASTRES)<br><br>*Seite 2, Zeile 32 - Seite 3, Zeile 10; Figuren 5-8* | 1,2,4,8 | B 62 J 1/02 |
| A | GB-A- 914 345 (NIEDDU)<br>*Insgesamt* | 1,4,6 | |
| A | FR-A- 562 015 (ROBERTI-PRONER)<br>*Seite 2, Zeilen 24-26; Figur 3* | 1,5 | |
| A | US-A-2 262 221 (BULLOCK) | | |
| A | US-A-3 884 525 (MESINGER) | | |
| A | DE-A-2 353 930 (MERTENS) | | RECHERCHIERTE SACHGEBIETE (Int. Cl. ³) |
| A | FR-A-2 192 524 (GALLET) | | B 62 J |

Der vorliegende Recherchenbericht wurde für alle Patentansprüche erstellt.

| Recherchenort | Abschlußdatum der Recherche | Prüfer |
|---|---|---|
| DEN HAAG | 12-10-1982 | NADELHOFFER J. |